# EUROPÄISCHE PATENTANMELDUNG

(11) **EP 4 461 953 A1**
(43) Veröffentlichungstag der Anmeldung: **13.11.2024**
(21) Anmeldenummer: 24172499.6
(22) Anmeldetag: 25.04.2024
(51) Int. Cl.: F03D 1/06, F03D 80/50

(54) **ROTORBLATT UND VERFAHREN ZUR WIEDERVERWENDUNG VON ROTORBLÄTTERN**

(30) Priorität: 08.05.2023 DE 102023111928
(71) Anmelder: Deutsches Zentrum für Luft- und Raumfahrt e. V., 53227 Bonn-Oberkassel (DE); Hochschule Emden/Leer, 26723 Emden (DE)
(72) Erfinder: Höll, Lea, 53227 Bonn-Oberkassel (DE); Nickel, Jörg, 53227 Bonn-Oberkassel (DE); Beyland, Lutz, 53227 Bonn-Oberkassel (DE); Werthen, Edgar, 53227 Bonn-Oberkassel (DE); Dr.-Ing. Zerbst, David, 53227 Bonn-Oberkassel (DE); Prof. Dr.-Ing. Hühne, Christian, 53227 Bonn-Oberkassel (DE); Prof. Dr.-Ing. Helms, Olaf, 26789 Leer (DE)
(74) Vertreter: Gerstein, Hans Joachim

(57) **Zusammenfassung**

Ein Rotorblatt für eine Windkraftanlage mit einer Tragholmstruktur (4a, 4b) und einer die Tragholmstruktur (4a, 4b) umhüllenden Strömungsprofilschale (1a, 1b) wird beschrieben. Die Strömungsprofilschale (1a, 1b) ist aus einem Biowerkstoff gebildet. Die Tragholmstruktur (4a, 4b) ist aus einem Material mit einer höheren Festigkeit als der Biowerkstoff der Strömungsprofilschale (1a, 1b) gebildet und erstreckt sich über die Länge der Strömungsprofilschale (1a, 1b). Die Strömungsprofilschale (1a, 1b) ist an der Tragholmstruktur (4a, 4b) demontierbar derart befestigt, dass die Strömungsprofilschale (1a, 1b) von der Tragholmstruktur (4a, 4b) lösbar und zur Weiterverwendung der Tragholmstruktur (4a, 4b) auswechselbar ist und im befestigten Zustand fest an der Tragholmstruktur (4a, 4b) gehalten wird.

## Beschreibung

Die Erfindung betrifft ein Rotorblatt für eine Windkraftanlage mit einer Tragholmstruktur und einer die Tragholmstruktur umhüllenden Strömungsprofilschale.

Die Erfindung betrifft weiterhin ein Verfahren zur Wiederverwertung von Rotorblättern für Windkraftanlagen mit einer Tragholmstruktur und einer die Tragholmstruktur umhüllenden Strömungsprofilschale.

Herkömmliche Windkraftanlagen haben Rotorblätter aus Faserkunststoffverbunden. Die Rotorblätter sind mechanisch stark belastet und Umwelteinflüssen ausgesetzt. Sie haben eine begrenzte Lebenszeit und müssen ausgewechselt werden. Zudem werden bestehende Anlagen durch neue Windenergieanlagen mit höherer Leistung ersetzt (Repowering). Dabei ist das Recycling der aus Faserkunststoffverbunden (FKV) bestehenden Rotorblätter problematisch. Die Fasern können mittels Pyrolyse oder Solvolyse recycelt werden. Denkbar ist auch eine energetisch-stoffliche Verwertung von Glasfaserverbundkunststoffen in der Zementindustrie. Angestrebt wird hingegen jedoch die Zurückgewinnung der Materialien für eine Wiederverwendung, um auf diese Weise eine bessere Kreislauffähigkeit zu erreichen.

Liu, P. und Barkow, C. Y.: The Environmental Impact of Wind Turbine Blades, in: IOP-Conference Series: Materials Science and Engineering, 2016, 139 012032 offenbaren den Material- und Energiebedarf für die Herstellung, Nutzung und Verwertung von Rotorblättern.

Nielsen, P. C.: Construction of the 18-Meter Wooden Blade at Niebe-Moelle B., in: NASA-TM-76996, National Aeronautics and Space Administration, Washington, D.C., 20546, November 1982 beschreibt Rotorblätter, die aus einem massiven Holz-Holm und einer mit Sperrholz beplankten Außenhaut hergestellt sind. Die Verbindung der Schale mit dem Holm wird durch Kleben realisiert. Aufgrund der sehr guten Ermüdungsfestigkeiten erscheint Holz besonders geeignet, um die auftretenden Lastwechsel bei Rotorblättern ertragen zu können.

Nielsen, P. C.: Construction of Low-Cost, Mod-0A Wood Composite Wind Turbine Blades, in: NASA-TM-83046, 28th National SAMPE Symposium and Exposition Anaheim, CA, 12.-14. April 1983 beschreibt eine Holz-Epoxid-Verbundbauweise für Rotorblätter, die aus einer D-Holmstruktur aus laminiertem Fichtenfurnier und Birkensperrholz sowie aus einem Hinterkasten aus Sperrholz mit Wabenstruktur bestehen. Die Fertigung der Schale erfolgt durch Laminieren von Furnierschichtholz in zwei Negativformen und anschließendem Aufbringen von Druck durch einen Vakuumsack. Das verwendete Holz wird mit Epoxidharz getränkt und so wasserbeständig gemacht. Diese Bauweise wurde durch eine reine Faserkunststoffverbund-Bauweise verdrängt und nicht weiterverfolgt.

WO 03/008800 A1 beschreibt ein Rotorblatt mit einer Anzahl von vorgefertigten Streifen aus Holzmaterial, die mit abwechselnden Sequenzen von Streifen aus Carbon-Faserverbundmaterial gehalten werden. Diese Streifen sind über den Außenumfang des Rotorblatts verteilt. Die Schichten können mit einem innenliegenden C-Träger verbunden sein. Zusätzlich zu dem Holzmaterial wird Kohlenstofffaser-Kunststoffverbundmaterial (CFK) verarbeitet. Teile der Schale bestehen aus einer Anordnung von Sperrholzbalken und dazwischenliegenden pultrudierten CFK-Profilen. Der Rest der Schale besteht aus Holz. Die Komponenten werden miteinander verklebt und das gesamte Rotorblatt ist gegen Eindringen von Feuchtigkeit mit Glasfaser-Kunststoffmaterial beschichtet

EP 2 985 138 A1 beschreibt ein Rotorblatt für eine Windkraftanlage mit einem Hohlkörper, der eine Wandung als Druckseite und eine Wandung als Saugseite und ein sich zwischen der Druckseite und der Saugseite erstreckendes Scherelement aufweist. Die Wandungen sind aus einem Holzwerkstoff gebildet. Ein Gurt aus Kohlenstofffaser-Kunststoffverbundmaterial kann sich in Längserstreckungsrichtung des Rotorblattes an der Oberseite der Wandlungen erstrecken.

Zur Herstellung von recycelbaren Rotorblättern wird beispielsweise in Dubey, P.K., Manhanth, S.K., Dixit, A. et al.: Recyclable Epoxy Systems for Rotor Blades, in: IOP Conference Series: Materials Science and Engineering 2020, 942 012014 die Verwendung von recycelbaren Epoxy-Systemen beschrieben, die als Thermoplast wiederverwertbar sind.

Während Epoxidharzsysteme normalerweise mit Härtern eine Verbindung eingehen und zu starren, dreidimensionalen Netzwerken aushärten, bildet sich bei der Verbindung von Epoxidharz und Recyclamine-Härtern ein Netzwerk mit speziell entwickelten Spaltpunkten an Vernetzungsstellen. An diesen Spaltpunkten lassen sich unter vordefinierten Bedingungen duroplastische Epoxide in Thermoplaste umwandeln. Diese können mittels Solvolyse aufgespalten werden und die Fasern können zurückgewonnen werden. Die chemische und thermische Beständigkeit und damit die Rezyklierbarkeit kann mit dem Recyclamine-System eingestellt werden. Faserkunststoffverbunde auf Recyclamine-Basis weisen ähnliche oder sogar bessere Ergebnisse bei Zug- und Biegeversuchen auf als herkömmliche Faserkunststoffverbunde. Ein Verbund aus zurückgewonnenen Fasern verfügt über eine um etwa 10 % verminderte Zugfestigkeit. Das zurückgewonnene Thermoplastmaterial kann zum Beispiel im Spritzgussverfahren weiterverarbeitet werden.

Bennett, L., Velenturf, A.: Sustainable Decommissioning: Wind Turbine Blade Recycling, Report from Phase 1 of the Energy Transition Alliance Blade Recycling Project, Technical Report, März 2021, DOI: 10.13140/RG.2.2.15202.86723 beschreibt den Zielkonflikt zwischen einer langen Lebensdauer bei sehr geringem Gewicht von Rotorblättern und der Rückführung der Materialien in den Kreislauf am Ende der Lebensdauer bei der aktuellen Produktgestaltung von Rotorblättern aus Faserkunststoffverbunden. Komponenten aus Faserkunststoffverbunden sind sehr langlebig, halten den meisten Witterungsbedingungen stand, und mit ihnen lassen sich besonders leichte Konstruktionen ermöglichen, die wiederum zu einem verringerten Ressourceneinsatz beim Transport und der Nutzung führen. Faserkunststoffverbunde sind jedoch mit aktuellen Verfahren nicht in der Weise rezyklierbar, dass diese als hochwertige Sekundärrohstoffe verwendet werden können.

Ausgehend hiervon ist es Aufgabe der vorliegenden Erfindung, ein verbessertes Rotorblatt für eine Windkraftanlage und ein Verfahren zur Wiederverwertung von Rotorblättern zu schaffen, um eine möglichst hohe Kreislauffähigkeit und mit möglichst geringem Energieaufwand für die Herstellung und hoher Langlebigkeit eine ökonomisch und ökologisch verbesserte Wirkung zu erreichen.

Die Aufgabe wird mit dem Rotorblatt mit dem Merkmal des Anspruchs 1 und mit dem Verfahren zur Wiederverwendung von Rotorblättern mit dem Merkmal des Anspruchs 13 gelöst. Vorteilhafte Ausführungsformen sind in den Unteransprüchen beschrieben.

Ein gattungsgemäßes Rotorblatt für eine Windkraftanlage hat eine Tragholmstruktur und eine die Tragholmstruktur umhüllende Strömungsprofilschale.

Es wird vorgeschlagen, dass die Strömungsprofilschale aus einem Biowerkstoff gebildet ist. Die Tragholmstruktur ist aus einem Material mit einer höheren Festigkeit als der Biowerkstoff der Strömungsprofilschale gebildet und erstreckt sich über die Länge der Strömungsprofilschale. Damit wird ein Biegetorsionsträger bereitgestellt, der die Strömungsprofilschale trägt. Die an ein Rotorblatt gestellten Festigkeitsanforderungen werden durch eine solche Tragholmstruktur erfüllt.

Die Strömungsprofilschale ist an der Tragholmstruktur demontierbar derart befestigt, dass die Strömungsprofilschale von der Tragholmstruktur lösbar und zur Weiterverwendung der Tragholmstruktur auswechselbar ist und im befestigten Zustand fest an der Tragholmstruktur gehalten wird. Damit kann die innere Tragholmstruktur wiederverwendet werden. Ein Recycling oder eine Entsorgung ist dann nur für die Strömungsprofilschale erforderlich, die der Witterung und dem Verschleiß stärker ausgesetzt ist.

Damit wird ein Kreislaufszenario für das Rotorblatt realisiert, bei dem die lasttragenden Komponenten wiederverwendet werden. Zur Erhöhung der Biegesteifigkeit der Strömungsprofilschale ist die Tragholmstruktur aus einem Material gebildet, das die Anforderungen an die Festigkeit und Steifigkeit, insbesondere an eine hohe Zugfestigkeit und Biegefestigkeit und einen hohen Elastizitätsmodul bei möglichst geringem Gewicht erfüllt. Dies wird insbesondere mit Kohlenstofffaser-Kunststoffverbunden (CFK) und Metallwerkstoffen, wie Aluminiumlegierungen erreicht. Die Herstellung, Verarbeitung und das Recycling von Tragholmstrukturen aus diesen Werkstoffen erfordert jedoch einen hohen Energieaufwand. Daher ist es sinnvoll, das Material so lange wie möglich im Verwendungskreislauf zu halten, indem die daraus gefertigten Komponenten in ihrer Form und Funktion wiederverwendet werden. Dies wird erreicht, indem die Strömungsprofilschale so mit der Tragholmstruktur verbunden wird, dass eine im Wesentlichen zerstörungsfreie Demontage der Tragholmstruktur möglich bleibt.

Die Tragholmstruktur ist vorzugsweise aus einem Kohlenstofffaser-Kunststoffverbundmaterial gebildet. Damit kann ein hochfester, leichter und gut verarbeitbarer Biegetorsionsträger realisiert werden.

Die Tragholmstruktur kann bei der Weiterverwendung einen Verlängerungsabschnitt haben, der an die zur Weiterverwendung ausgewechselten Tragholmstruktur angeformt wird. Damit lässt sich die Tragholmstruktur an ein zur Erhöhung der Leistungsfähigkeit der Windkraftanlage vergrößertes Rotorblatt anpassen. Hierzu kann der Verlängerungsabschnitt beispielsweise an der bisherigen Rotorblattspitze angebracht werden. Da sich mit der Blattlänge auch die Dickenverteilung, Krümmung und Twist ändern, ist alternativ oder zusätzlich dazu eine Verlängerung vor allem an der Blattwurzel sinnvoll. Die Anformung eines Verlängerungsabschnitts kann gegebenenfalls mit einer Aufdickung der alten Tragholmstruktur kombiniert werden.

Die Strömungsprofilschale ist vorzugsweise aus einem Holzwerkstoff gebildet. Hierzu bietet sich die Verwendung von Funierschichtholz an. Funierschichtholz verfügt über eine definierte Faserstruktur und ermöglicht eine einfache Herstellung von gekrümmten Oberflächenprofilen im Leichtbau. Das Furnierschichtholz kann dabei an profilierte Massivholzstege angebracht werden, die feste Bezugspunkte bilden. Beispielsweise kann ein Massivholzsteg an der Vorderkante des Rotorrotorblattes und ein sich konisch verjüngender Massivholzsteg an der Hinterkante des Rotorblattes vorhanden sein.

Furnierschichtholz ist eine Sperrholzplatte, die aus mehreren übereinanderliegenden Holzplatten, auch Furnierschichten genannt, besteht, wobei die Furnierschichten miteinander verklebt sind. Die Furnierschichten können dabei mit ihrem Faserverlauf abwechselnd kreuzweise oder, bevorzugt, überwiegend im Faserverlauf parallel liegend verleimt sein, sodass stark richtungsabhängige Materialeigenschaften, insbesondere Festigkeitswerte realisiert werden.

Die äußere Oberfläche der Strömungsprofilschale kann beschichtet sein. Damit wird der Biowerkstoff der Strömungsprofilschale vor Umwelteinflüssen geschützt. Die Beschichtung kann durch Lackierung, vorzugsweise mehrlagig, oder durch ein den Biowerkstoff umhüllenden Mantel realisiert werden. Der Mantel kann beispielsweise aus einer Folie, einem Kunststofffaserverbund oder einem imprägnierten Gewebe gebildet sein. Ein solcher Mantel lässt sich im Recyclingprozess von dem darunterliegenden Biowerkstoff trennen und separat verwerten.

Die Tragholmstruktur kann einen sich in eine Erstreckungsrichtung erstreckenden Holm und mehrere, in Erstreckungsrichtung im Abstand voneinander an dem Holm angeordnete Spante haben, die quer von dem Holm abragen. Mithilfe des Holms lässt sich ein stabiler Biegetorsionsträger realisieren, der die Spante aufnimmt. Die Form der Spante ist dann an die gewünschte Profilstruktur der Strömungsprofilschale angepasst, um diese zu tragen und die Kräfte von der Strömungsprofilschale in den Biegetorsionsträger abzuleiten. Die lastaufnehmenden Flächen können damit möglichst weit weg von der Biegeachse positioniert werden, um ein hohes Flächenträgheitsmoment zu erhalten. Der Holm kann beispielsweise als Kastenholm, I-Träger, C-Träger oder D-Träger ausgeführt werden.

Die Spante können in Erstreckungsrichtung durch Stringer miteinander verbunden sein. Damit lässt sich eine zusätzliche Formversteifung und Kraftableitung in der Tragholmstruktur im Abstand zum Holm erreichen.

Die Tragholmstruktur kann einen sich im Wurzelbereich zu einem kreisförmigen Anschlussflansch verbreiternden Holm und/oder Holmübergang haben. Die Strömungsprofilschale kann den kreisförmigen Anschlussflansch umfangsseitig umschließen und sich in Erstreckungs-richtung der Tragholmstruktur erstreckende Befestigungsbolzen haben, die über den Umfang des Anschlussflansches verteilt mit der Strömungsprofilschale und der Tragholm-struktur (direkt oder indirekt) verbunden sind. Vorteilhaft ist es, wenn der Wurzelbereich der Tragholmstruktur zylinderförmig ist und an seiner freien Stirnseite Befestigungsbohrungen zum Einschrauben von Befestigungsbolzen oder stoffschlüssig angeformte Befestigungsbolzen hat, die aus der freien Stirnseite herausragen. Die Strömungsprofilschale liegt dann an dem Außenumfang des zylinderförmigen Wurzelbereichs der Tragholmstruktur an und kann dort stoffschlüssig (zum Beispiel durch Verkleben), formschlüssig (zum Beispiel durch Verschrauben oder Vernieten) oder kraftschlüssig mit der Tragholmstruktur verbunden sein. Damit wirken die Befestigungsbolzen auch unmittelbar indirekt zur Befestigung der Strömungsprofilschale an dem Rotorflansch einer Windkraftanlage.

Die Tragholmstruktur kann ein Biegetorsionsträger mit einem Kastenholmprofil, D-Holmprofil, I-Trägerprofil oder C-Trägerprofil sein. Diese Profile sind besonders geeignet, um einen Biegetorsionsträger für ein Rotorblatt zu bilden. Dabei kann, insbesondere bei I- und C-Trägerprofilen, ggf. eine enge Verbindung mit einer mittragenden Schale zu einem geschlossenen Profil beitragen, um eine verbesserte Torsionssteifigkeit bzw. Torsionsfestigkeit zu erhalten.

Die Tragholmstruktur kann mehrere, sich in Erstreckungsrichtung der Tragholmstruktur erstreckende Gurte haben. Vorteilhaft sind beispielsweise Gurte aus Kohlenstofffaser-Kunststoffverbundmaterial (CFK), die sich bei der Demontage leicht von den anderen Bauteilen des Rotorblattes trennen und wiederverwenden lassen. Die Tragholmstruktur oder die Strömungsprofilschale kann Stege haben, welche die Gurte quer zur Erstreckungsrichtung miteinander verbinden. Da die Stege im Wesentlichen nur Scherkräfte aufnehmen, können diese beispielsweise aus Holzmaterial, wie z. B. Sperrholz, gebildet werden. Dies ermöglicht eine ökologisch und ökonomisch vorteilhafte Herstellung, Verarbeitung und Verwertung bei guten Materialeigenschaften für die hohe Langzeitbelastung von Rotorblättern.

Die Tragholmstruktur kann mit der Strömungsprofilsschale formschlüssig und/oder stoffschlüssig lösbar miteinander verbunden sind.

Die Wiederverwertung von Rotorblättern für Windkraftanlagen mit einer Tragholmstruktur und einer die Tragholmstruktur umhüllenden Strömungsprofilschale kann durch die Schritte erfolgen:
- Demontieren der Strömungsprofilschale von der Tragholmstruktur durch Lösen der Verbindungsstellen zwischen der Tragholmstruktur und der Strömungsprofilschale so, dass die Tragholmstruktur funktionsfähig erhalten bleibt,
- Aufbereiten der Tragholmstruktur für die Weiterverwendung mit Anpassen an die hierzu benötigte Struktur, und
- Umhüllen der aufbereiteten Tragholmstruktur mit einer neuen Strömungsprofilschale.

Zur Anpassung der wiederverwendeten Tragholmstruktur an neue Anforderungen leistungsfähigerer Windkraftanlagen kann ein Verlängern der demontierten Tragholmstruktur im Schritt des Aufbereitens erfolgen. Hierzu kann (mindestens) ein Verlängerungsabschnitt an die demontierte Tragholmstruktur angeformt werden. Dies kann beispielsweise durch stoffschlüssiges Anlaminieren und/oder durch formschlüssige Verbindung des Verlängerungsabschnitts an die demontierte (gebrauchte) Tragholmstruktur erfolgen.

Die Erfindung wird nachfolgend anhand der beigefügten Zeichnungen mit Ausführungsbeispielen beispielhaft erläutert. Es zeigen:
- Fig. 1: - perspektivische Explosionsansicht eines Rotorblattes mit Strömungsprofilschale und Tragholmstruktur;
- Fig. 2: - perspektivische Ausschnittansicht der Tragholmstruktur aus Figur 1 mit Blick auf den Wurzelbereich;
- Fig. 3: - vergrößerte Ausschnittansicht auf einen Spant der Tragholmstruktur aus Figur 2;
- Fig. 4: - Front-Schnittansicht des Rotorblatts aus Figur 1 mit Blick auf die Tragholmstruktur mit einem Spant und umhüllender Strömungsprofilschale im zusammengebauten Zustand;
- Fig. 5: - Draufsicht auf einen Spant der Tragholmstruktur mit Anpassungen zur adaptierten Wiederverwertung für eine größere Strömungsprofilschale;
- Fig. 6: - Schnittansicht des mittleren Bereichs einer zweiten Ausführungsform eines Rotorblattes mit Kastenholm als Biegebalken mit CFK-Gurten und Holzstegen und daran geklebter Strömungsprofilschale aus Furnierschichtholz;
- Fig. 7: - Schnittansicht des Wurzelbereichs des Rotorblattes aus Figur 6 mit Holzverstärkung und Befestigungshülsen;
- Fig. 8: - Schnittansicht des mittleren Bereichs einer dritten Ausführungsform eines Rotorblattes mit aus zwei U-Profilen gebildetem Kastenholm und daran mit Bolzenverbindung befestigter Strömungsprofilschale aus Furnierschichtholz;
- Fig. 9: - Schnittansicht des Wurzelbereichs des Rotorblattes aus Figur 6 mit Rippe und Befestigungshülsen;
- Fig. 10: - Schnittansicht des mittleren Bereichs einer vierten Ausführungsform eines Rotorblattes mit einer Strömungsprofilschale mit Spanten aus Furnierschichtholz und mit einem aus zwei U-Profilen und Holzstegen gebildeten Kastenholm und in die Holzstege formschlüssig eingesteckten Spanten;
- Fig. 11: - Schnittansicht des Wurzelbereichs des Rotorblattes aus Figur 10 mit Rippe und Befestigungshülsen;
- Fig. 12: - Schnittansicht des mittleren Bereichs einer vierten Ausführungsform eines Rotorblattes mit aus zwei U-Profilen gebildeten Kastenholm und daran angeklebter Strömungsprofilschale aus Furnierschichtholz;
- Fig. 13: - Schnittansicht des Wurzelbereichs des Rotorblattes aus Figur 12 mit Befestigungshülsen.

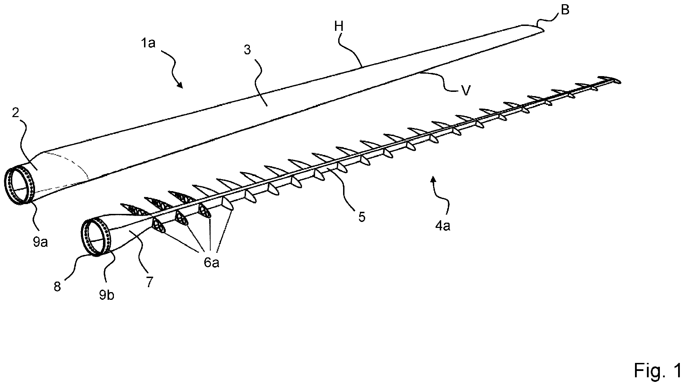

Fig. 1 zeigt eine perspektivische Explosionsansicht eines Rotorblattes mit Strömungsprofilschale 1a und Tragholmstruktur 2a.

Die Strömungsprofilschale 1a ist ein im Innenraum hohles Bauteil, das sich über eine Erstreckungslänge L erstreckt. Es hat in seinem sich von der Blattspitze B zu einem Wurzelbereich 2 erstreckenden Profilabschnitt 3 eine profilierte Oberfläche mit einer abgerundeten Vorderkante V und einer konisch schmal zulaufenden Hinterkante H.

Die Tragholmstruktur 4a weist einen sich in Erstreckungslänge L erstreckenden Holm 5 und davon abragende Spante 6a auf. Die Spannte 6a sind im Abstand voneinander über die Erstreckungslänge L am Holm 5 verteilt angeordnet. Die Länge und Form der Spante 6a variiert, um eine an das Profil der Strömungsprofilschale 1a angepasste Anlagefläche bereitzustellen und die auf die Strömungsprofilschale 1a wirkende Kraft in den Holm 5 abzuleiten.

Der Holm 5 geht in einen sich verbreitenden Wurzelbereich 7 (Flanschabschnitt) über, der ein zylinderförmigen Ende hat. An der Stirnseite des Wurzelbereichs 7 sind Befestigungsöffnungen bzw. Befestigungshülsen 8, beispielsweise in Form von Gewindebohrungen, eingebracht, die über den Umfang des zylinderförmigen Endes verteilt angeordnet sind. Damit können Befestigungsbolzen in die Gewindebohrungen 8 eingeschraubt werden, um das Rotorblatt an einen Flansch einer Nabe einer Windkraftanlage anzuschrauben.

Im zusammengebauten Zustand befindet sich die dargestellte Tragholmstruktur 4a im Innenraum der Strömungsprofilschale 1a. Damit umhüllt die Strömungsprofilschale 1a die Tragholmstruktur 4a. Der zylinderförmige Abschnitt des Wurzelbereichs 2 der Strömungsprofilschale 1a umfasst dabei das zylinderförmige Ende des Wurzelbereichs 7 (d. h. den Flanschabschnitt) der Tragholmstruktur 4a.

Der Wurzelbereich 2 der Strömungsprofilschale 1 weist an seinem zylinderförmigen Ende Bohrungen 9a auf. Ebenso hat das zylinderförmige Ende des Wurzelbereichs 7 entsprechende, über den Umfang verteilte Bohrungen 9b. Auf diese Weise lässt sich die Strömungsprofilschale 1 formschlüssig durch in die Bohrungen 9a, 9b eingebrachte Schrauben oder Nieten mit der Tragholmstruktur 4a zerstörungsfrei lösbar verbinden.

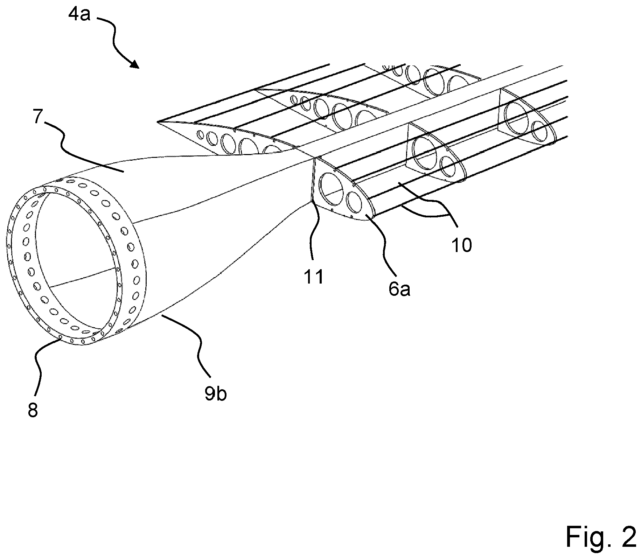

Fig. 2 lässt eine perspektivische Ausschnittansicht der Tragholmstruktur 4a aus Figur 1 mit Blick auf den Wurzelbereich 7 erkennen. Deutlich wird, dass der kastenförmige Holm 5 in dem Wurzelbereich 7 in einen deutlich größeren zylinderförmigen Abschnitt übergeht. Dieser zylinderförmige Abschnitt hat an seinem Umfang verteilt angeordnete Bohrungen 9b und an seiner Stirnseite Gewindebohrungen 8.

Erkennbar ist weiterhin, dass die beidseits quer vom Holm 5 abragenden Spante 6a mit Stringern 10 miteinander verbunden sind. Diese Stringer 10 sind an den Stirnseiten der Spante 6a angebracht. Sie können beispielsweise Holzleisten, wie z. B. Leimholzleisten, oder Spanngurte und dergleichen sein. Erkennbar ist, dass die Spante 6a Öffnungen haben können, um Gewicht einzusparen. Die Spante 6a können beispielsweise aus Sperrholz gebildet sein.

Die Spante 6a können mit Befestigungswinkeln 11 (Montagewinkeln) an den Holm 5 angeschraubt oder angenietet werden.

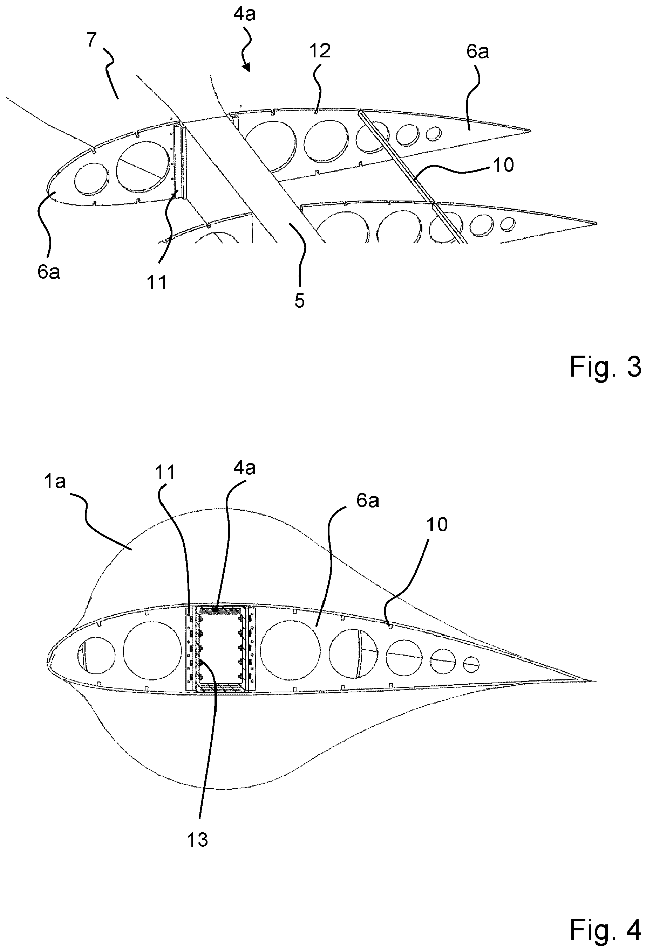

Fig. 3 zeigt eine vergrößerte Ausschnittansicht auf einen Spant 6a der Tragholmstruktur 4a aus Figur 2.

Erkennbar ist, dass die Spante 6a an ihrer Oberkante und Unterkante Nuten 12 haben, in die jeweils ein Stringer 10 eingelegt wird. Der Stringer 10 kann mit dem jeweiligen Spant 6a verklebt werden. Denkbar ist aber auch eine kraftschlüssige Verbindung durch Einpressen.

Weiterhin ist erkennbar, dass die Spante 6a mit Hilfe von L-förmigen Befestigungswinkeln 11 mit dem Holm 5 verbunden sind. Die Spante 6a können mehrteilig sein, wobei an einander gegenüberliegenden Seiten des Holms 5 jeweils ein Teil eines Spants 6a angebracht ist.

Fig. 4 lässt eine Front-Schnittansicht des Rotorblatts aus Figur 1 mit Blick auf die Tragholmstruktur 4a mit einem Spant 6a und der umhüllenden Strömungsprofilschale 1a im zusammengebauten Zustand erkennen.

In diesem Abschnitt des Schnitts ist der Holm 5 rechteckförmig ausgebildet. Im Vergleich zu den längeren Seitenwänden können die kürzeren oberen und unteren Wände dicker sein, um die Lasten optimal abzutragen. Damit lässt sich eine verbesserte Biegesteifigkeit erreichen.

Erkennbar ist, dass die Strömungsprofilschale 1a an der Stirnseite des Spants 6a aufliegt. Damit ist die Strömungsprofilschale 1a fest mit dem Spant 6a und damit auch mit der Tragholmstruktur 4a verbunden, welche im Wesentlichen durch den Holm 5 als Biegetorsionsträger gebildet wird. Die Spante 6a können über die Befestigungswinkel 11 mittels Schrauben 13 mit dem Holm 5 fest verbunden werden.

Deutlich wird weiterhin die aerodynamisch ausgebildete Strömungsprofilschale 1a mit der gekrümmten Vorderkante V und der spitz zulaufenden Hinterkante H.

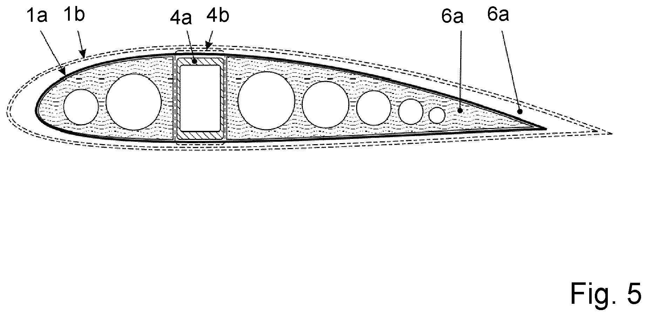

Fig. 5 zeigt eine Draufsicht auf einen Spant 6a der Tragholmstruktur 4a mit Anpassungen zur adaptierten Wiederverwertung für eine größere Strömungsprofilschale 1b. Die Tragholmstruktur 4a, welche zunächst für ein kleineres Rotorblatt genutzt wurde, kann zur Wiederverwendung in Verbindung mit einem leistungsfähigeren größeren Rotorblatt adaptiert werden. Hierzu kann die Tragholmstruktur 4a einfach im Übergang des Wurzelbereichs 7 zum Profilbereich 3 verlängert werden. Damit können in diesem Bereich größere Spante 6a als bisher eingebracht und die kleineren Spante 6a in Richtung Blattspitze B verschoben werden. Denkbar ist aber auch eine Querschnittsanpassung der Spante 6a im Rahmen des Remanufacturings.

Hierzu können die Schraubverbindungen der Spante 6a mit dem Holm 5 gelöst und neue, adaptierte größere Spante 6b an den Holm 5 angebracht werden. Damit lassen sich die für eine kleinere Strömungsprofilschale 1a vorgesehenen Spante 6a der bisherigen Tragholmstruktur 4a an eine größere Strömungsprofilschale 1b anpassen.

Im Zuge der Anpassung der Tragholmstruktur 4a an ein leistungsfähigeres Rotorblatt ist auch eine Vergrößerung des Querschnitts des bisherigen Holms 5 an einen größeren Querschnitt durch einen vergrößerten Holm 5b möglich. Dies kann einfach dadurch erreicht werden, dass ein zur Blattspitze konisch zulaufender Holm 5 verwendet und im Wurzelbereich 7 durch einen entsprechend im Querschnitt sich vergrößernden Holmabschnitt verlängert wird. Denkbar ist aber auch eine Aufdoppelung des bisherigen Holms 5 oder eine Auftrennung des Holms 5 und Einbau von Vergrößerungs-Zwischenstücken. Dies bietet sich insbesondere bei einem aus mehreren C-Trägern gebildeten Holm 5 an, die durch Stege miteinander verbunden sind. Die Querschnittsvergrößerung lässt sich durch Einbau breiterer Stege einfach realisieren. Wenn diese Stege aus Holzmaterial gebildet sind, lässt sich eine ökologisch und ökonomisch vorteilhafte Anpassung realisieren.

Der Aufbau dieses neuen kreislaufgerechten Rotorblatts orientiert sich strukturmechanisch an klassischen Rotorblättern, die im Wesentlichen aus einem inneren biegesteifen Holm und aus äußeren strömungsgünstigen Schalenbauteilen bestehen. Im Unterschied zur klassischen Bauweise ist nun eine langlebige Tragholmstruktur 4a, 4b über lösbare Montageschnittstellen derart integriert, dass diese mit relativ geringem Aufwand und ohne Schädigung wieder entnommen und für den Aufbau eines neuen Rotorblatts bereitgestellt werden kann.

Andere Komponenten des Rotorblatts sind derart gestaltet, dass diese überwiegend aus nachwachsenden Rohstoffen herstellbar sind und sich am Ende einer Lebensphase vor allem thermisch problemlos verwerten lassen. Zu diesen Komponenten zählen die Rippen bzw. Spanten 6a, 6b und Stringer 10, mit denen (etwa wie im klassischen Flugzeugbau) die Fläche des Rotorblatts strukturmechanisch unterstützt wird. Zu den Komponenten aus nachwachsendem Rohstoff zählt zudem die Außenschale, d. h. die Strömungsprofilschale 1a, 1b als dünnwandige Beplankung. Die relevanten Montageschnittstellen für das Integrieren und Separieren der langlebigen Tragholmstruktur 4a, 4b umfassen neben der kreisförmigen Schnittstelle zur Rotornabe eine Vielzahl an Montagewinkeln 11 zur lösbaren Befestigung der Rippenbauteile, d. h. der Spanten 6a, 6b. Die Strömungsprofilschale 1a, 1b selbst wird nur über die Spanten 6a, 6b und diese Montagewinkel 11 am Holm 5, 5a, 5b befestigt, da hiermit die Flächenlast der Strömungsprofilschale 1a, 1b strukturmechanisch günstig in Form von Querkräften in den Holm 5, 5a, 5b eingeleitet werden können. Die aus den Querkräften resultierende Biegebelastung wird vor allem durch den Holm 5, 5a, 5b aufgenommen.

Es bieten sich verschiedene Möglichkeiten des Remanufacturing.

Die langlebige Tragholmstruktur 4a, 4b ist derart gestaltet, dass diese am Ende einer Nutzungsphase von den sonstigen Bauteilen des alten Rotorblatts getrennt und für eine erneute Nutzung bereitgestellt werden kann.

Ein solcher Neuaufbau des Rotorblatts kann notwendig werden, wenn die Strömungsprofilschale 1a, 1b (Außenschale) durch Witterungseinflüsse Schaden genommen hat oder eine aerodynamische Weiterentwicklung umgesetzt werden muss. Durch Austausch von Rippen bzw. Spanten 6a, 6b, Stringern 10 und der alten Strömungsprofilschale 1a in eine neue Strömungsprofilschale 1b lassen sich Rotorblätter mit veränderten Profilquerschnitten und mit einem gewissen Größenzuwachs realisieren. Ein Größenzuwachs geht mit erhöhter Belastung der Tragholmstruktur 4a, 4b einher. Die somit nötige Steigerung der Tragfähigkeit gelingt durch Verstärkung der Zug- und Druckgurte des vorhandenen Holms 5, 5a, 5b. Dazu können auf der Oberseite und Unterseite zusätzliche Faserverstärkungen vor allem mit Orientierung in Längsrichtung durch Laminieren aufgebracht werden.

Die Außenschale des Rotorblatts, d. h. die Strömungsprofilschale 1a, kann in der ersten Nutzungsphase des Holms 5, 5a aus Sperrholz oder naturfaserverstärktem Kunststoff gebildet werden. In einer späteren Nutzungsphase des Holms 5, 5a, 5b kann eine neue Strömungsprofilschale 1b als Ummantelung und Profilstruktur eingesetzt werden, die aus demselben Material wie die vorherige Strömungsprofilschale 1a gebildet ist. Die Tragholmstruktur 4a des Rotorblatts kann in seiner ersten Nutzungsphase aus Glasfaser verstärktem oder kohlenstofffaserverstärktem Kunststoff mit beanspruchungsgerechter Faserorientierung gebildet werden. Ein für eine spätere Nutzungsphase angepasster Holmquerschnitt des Rotorblatts kann mit der wiederverwendeten Tragholmstruktur 4a, jedoch mit zusätzlichen Laminatschichten realisiert werden. Die Rippenelemente des Rotorblatts, d. h. die Spanten 6a können in der ersten Nutzungsphase der Tragholmstruktur 4a aus Sperrholz gebildet sein. In einer späteren Nutzungsphase der Tragholmstruktur 4b können die Spanten 6b wiederverwendet oder an die neue Größe und das neue Profil der Strömungsprofilschale 1b angepasste neue Spanten 6b genutzt werden. Diese Spanten 6b können ebenfalls aus Sperrholz gebildet sein. Die Stringer 10 können aus Leimholz gebildet sein. Die Montagewinkel 11 zwischen dem Holm 5, 5a, 5b und den Spanten 6a, 6b können beispielsweise aus korrosionsbeständigem Stahl sein. Die Verbindungselemente mit den Holm 5, 5a, 5b können ebenfalls aus korrosionsbeständigem Stahl sein.

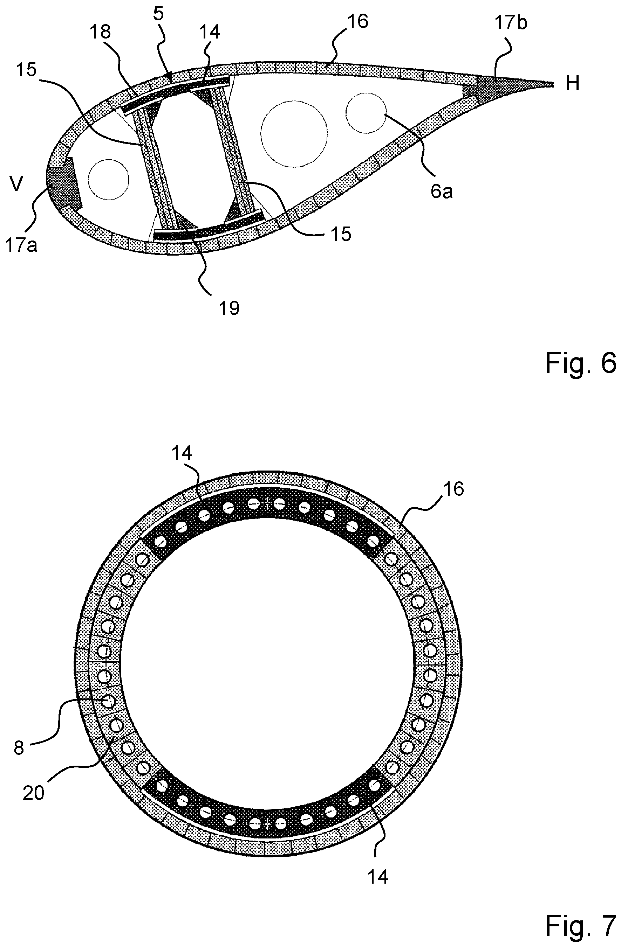

Fig. 6 zeigt eine Schnittansicht des mittleren Bereichs einer zweiten Ausführungsform eines Rotorblattes mit einem Kastenholm 5 als Biegebalken mit CFK-Gurten 14 und Holzstegen 15 und daran geklebter Strömungsprofilschale 1a aus Furnierschichtholz.

Die Strömungsprofilschale 1a ist beispielsweise aus Furnierschichtholzbalken 16 aufgebaut, die durch Spante 6a gestützt werden. Die Oberfläche der Strömungsprofilschale 1a kann durch Fräsen nachbearbeitet werden. An der Vorderkante V und Hinterkante H kann eine Holzverstärkung durch jeweils ein Massivholzprofil 17a, 17b in Form einer sich in Erstreckungsrichtung L erstreckenden profilierten Leiste vorgesehen sein.

Der Kastenholm 5 ist als Biegebalken mit CFK-Gurten 14 und Holzstegen 15 ausgeführt. Die sich in Erstreckungsrichtung L erstreckenden Holzstege 15 sind im Abstand voneinander und parallel zueinander angeordnet und an ihrer Längsstirnkante mit jeweils einem CFK-Gurt 14 verbunden. Dies kann beispielsweise durch Verkleben mit thermoplastischen Klebstoffen und/oder Harzen erfolgen.

Die Gurte 14 sind an das Querschnittsprofil und die Profiländerung in Längsrichtung L des Rotorblattes angepasst und zur Wurzel hin aufgefächert. Eine zusätzliche CFK Schicht kann an der Oberseite und Unterseite der Gurte 14 als Opferschicht angebracht sein, die später im Recyclingprozess abgetragen werden kann.

Die Krafteinleitung in die Gurte 14 kann über eine Klebeverbindung 18 mit der Strömungsprofilschale 1a, 1b erfolgen. Dabei können die Sperrholzstege 15 des Kastenholms 5 ebenfalls mit den Gurten 14 verklebt sein. Alle anderen Holzkomponenten können ebenfalls durch Kleben gefügt werden. Die Klebeverbindungen 18 können duroplastisch oder thermoplastisch ausgeführt werden, um so eine spätere zerstörungsfreie Demontage zu ermöglichen.

Der Kastenholm 5 kann durch innenliegende Holzwinkel 19 versteift werden.

Fig. 7 zeigt eine Schnittansicht des Wurzelbereichs des Rotorblattes aus Figur 6 mit einer Verstärkung durch Holzbalken 20 und Befestigungshülsen 8.

Es ist erkennbar, dass die Strömungsprofilschale 1a mit Holzbalken 20 verstärkt ist. Es können in die Holzbalken 20 eingeklebte oder eingeschraubte Befestigungshülsen 8 für die Verbindung mit einer Nabe einer Windkraftanlage stirnseitig in den Bohrkreis auf Höhe der Gurte 14 angeordnet sein. Die Befestigungshülsen 8 können ein Innengewinde zum Einschrauben von Befestigungsschrauben haben.

Die Demontage und das Remanufacturing kann wie folgt durchgeführt werden.

Das Rotorblatt kann an der Vorderkante V und Hinterkante H neben den Gurten 14 abgesägt werden. Die Stege 15 sollten möglichst nah an den Gurten 14 abgesägt werden. Es erfolgt dann ein Abtragen der verbleibenden Holzschicht auf den Gurten 14. Das Abtragen der obersten Kunststoffschicht der Gurte 14 dient gleichzeitig als Oberflächenvorbehandlung für das Überlaminieren. Die Gurte 14 können durch Überlaminieren aufgedickt und verlängert werden.

Die beschriebene Ausführungsform hat den Vorteil einer einfachen Montage des Rotorblattes aufgrund von Klebeverbindungen. Die Gurte 14 liegen ohne Verbindungselemente als Einzelkomponente vor, was die Nachbearbeitung erleichtert. Es sind keine zusätzlichen Verbindungselemente erforderlich, was ein verringertes Gewicht zur Folge hat, als andere Varianten.

Die Ausführungsform erfordert allerdings nachteilig viele nichtlösbare Klebeverbindungen bei Verwendung von Duroplasten. Bei der Verwendung von duroplastischen Klebstoffen ist voraussichtlich keine einfache Materialtrennung ohne Beschädigung der CFK-Komponenten möglich. Thermoplaste bringen hingegen hinsichtlich der Lösbarkeit Vorteile. Der Klebstoff muss einen Toleranzausgleich ermöglichen, was mit herkömmlicher Technologie grundsätzlich machbar ist.

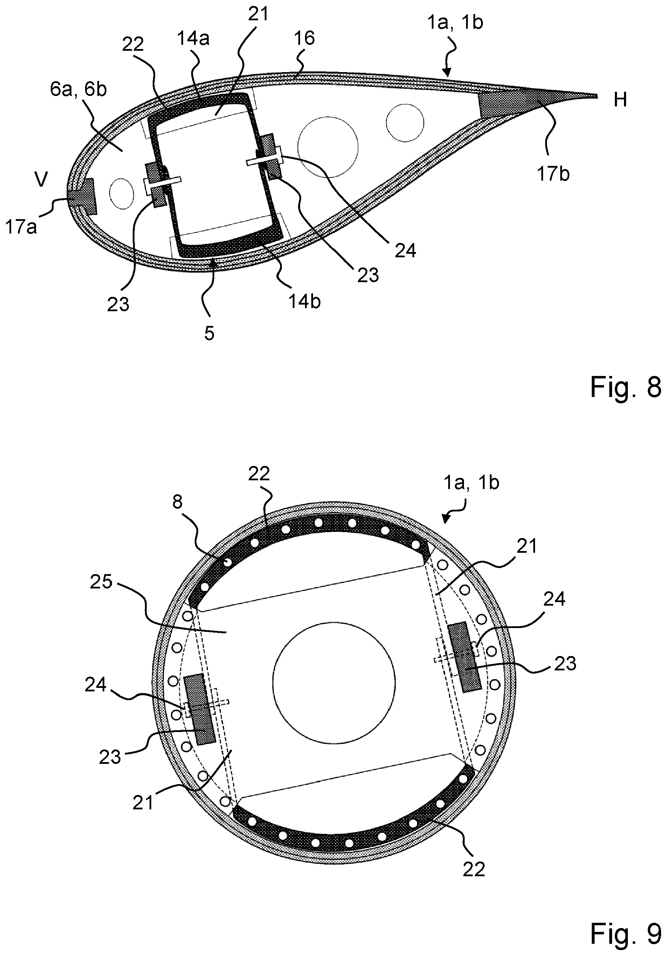

Fig. 8 lässt eine Schnittansicht des mittleren Bereichs einer dritten Ausführungsform eines Rotorblattes mit aus zwei U-Profilen gebildeten Kastenholm 5 und daran mit Bolzenverbindungen befestigter Strömungsprofilschale 1a aus Furnierschichtholz erkennen.

Die Strömungsprofilschale 1a ist aus formgepresstem Furnierschichtholz gebildet. Sie hat über die Länge des Rotorblattes verteilte Rippen bzw. Spante 6a als Stützen für die Strömungsprofilschale 1a und zur Krafteinleitung in die Holzstege 15. Es ist eine Holzverstärkung durch Profilleisten 17a, 17b aus Massivholz an der Vorderkante V und Hinterkante H vorgesehen.

Zwei U-Profile 14a, 14b aus kohlenstofffaserverstärktem Kunststoff CFK bilden einen Holmträger 5. Die beiden CFK-Profile 14a, 14b sind an das Querschnittsprofil und die Profiländerung in Längsrichtung L (in Blickrichtung der Figur 8) des Rotorblattes angepasst und zur Wurzel hin aufgefächert. Die Seitenwände der U-Profile 14a, 14b bilden seitliche Schubstege 21 aus CFK, die lang und dünn ausgelegt sind, sodass sie sich elastischer verhalten, um den Toleranzausgleich beim Montieren zu ermöglichen.

Seitliche Aussparungen in den seitlichen Schubstegen 21 ermöglichen eine Positionierung über den Spanten 6a, 6b zu ermöglichen. Die Spante 6a, 6b haben an ihrem oberen und unteren Randbereich jeweils eine Aussparung zur Aufnahme eines Querstegs 22 der U-Profile 14a, 14b.

Die Krafteinleitung aus der umhüllenden Strömungsprofilschale 1a, 1b in die CFK-Profile 14a, 14b erfolgt über eine Bolzenverbindung 24 mit Holzstegen 23. Die Holzstege 23 werden mit den Spanten 6a, 6b durch Verkleben oder Verkeilen verbunden. Die Spanten 6a, 6b sind mit der Strömungsprofilschale 1a, 1b verklebt.

Fig. 9 zeigt eine Schnittansicht des Wurzelbereichs des Rotorblattes aus Figur 6 mit Rippe und Befestigungshülsen.

An der Blattwurzel ist eine Verstärkung der Strömungsprofilschale 1a, 1b durch Rippen 25 und Holzbalken bzw. die dort auslaufenden Holzstege 23 vorhanden. Eingeklebte Befestigungshülsen 8 dienen zur Verbindung des Rotorblattes mit einer Nabe. Sie sind in dem Bohrkreis auf Höhe der CFK-Profile 14a, 14b bzw. der von ihrem Quersteg 22 jeweils in den Wurzelbereich auslaufenden Gurte, die eine Verlängerung des Querstegs 22 bilden, angeordnet.

Zur Demontage und zum Remanufacturing erfolgt ein Absägen der Vorderkante V und Hinterkante H neben den CFK-Profilen 14a, 14b. Die Bolzenverbindung 24 der CFK-Profile 14a, 14b wird gelöst bzw. zerstört. Die durch die CFK-Profile 14a, 14b gebildeten Gurte können durch Überlaminieren aufgedickt und verlängert werden. Eine Wiederverwendung der Durchgangsbohrungen ist für Verbindung mit neuer Rotorblattstruktur grundsätzlich möglich.

Damit lässt sich eine zerstörungsfreie Demontage der CFK-Profile 14a, 14b realisieren. Zudem gibt es durch die flexiblen seitlichen Schubstege 21 keine Toleranzprobleme zwischen der Strömungsprofilschale 1a, 1b und den CFK-Profilen 14a, 14b. Es ist eine lastgerechte Krafteinleitung in die CFK-Profile 14a, 14b möglich.

Der Aufbau führt allerdings zu einer etwas aufwändigeren Fertigung der CFK-Profile 14a, 14b aufgrund der Schubstege 21 und der notwendigen Aussparungen. Ein Überlaminieren der Profile wird infolge der Aussparungen erschwert. Die beiden C-Profile erfordern zur Bildung des Kastenholms 5 den Einsatz von relativ viel Carbonfaserverstärktem Kunststoff CFK. Zudem erhöhen die Bolzenverbindungen 24 das Gewicht des Rotorblattes. Der Fertigungs- und Kostenaufwand der Spanten 6a, 6b ist durch die etwas komplexere Formgebung etwas höher, als im vorher beschriebenen Ausführungsbeispiel.

Zudem ist bei der Konstruktion die Toleranzproblematik zwischen den Spanten 6a, 6b, der Strömungsprofilschale 1a, 1b und den Schubstegen 21 zu beachten.

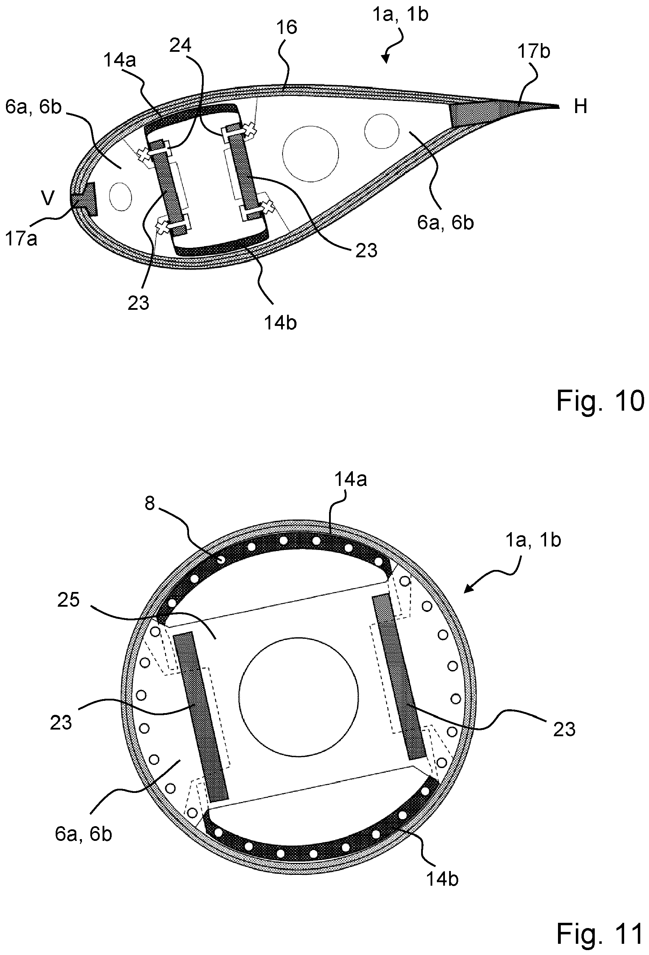

Fig. 10 zeigt eine Schnittansicht des mittleren Bereichs einer vierten Ausführungsform eines Rotorblattes mit einer Strömungsprofilschale 1a, 1b mit Spanten 6a, 6b aus Furnierschichtholz und mit einem aus zwei U-Profilen 14a, 14b und Holzstegen 23 gebildeten Kastenholm 5. Die Spanten 6a, 6b sind in die Holzstege 23 formschlüssig eingesteckt.

Die Strömungsprofilschale 1a, 1b ist aus einem formgepressten Furnierschichtholz gebildet. Es sind über die Erstreckungslänge L des Rotorblattes im Abstand voneinander verteilte Rippen bzw. Spanten 6a, 6b vorgesehen. Diese Spanten 6a, 6b dienen als Stützen für die Strömungsprofilschale 1a, 1b und zur Krafteinleitung in die Holzstege 23.

Die Strömungsprofilschale 1a, 1b hat eine Holzverstärkung an der Vorderkante V und Hinterkante H aus Profilleisten 17a, 17b.

Zwei U-Profile 14a, 14b aus Carbonfaser-verstärktem Kunststoff CFK bilden in Kombination mit den Holzstegen 23 einen Holmträger 5. Die CFK-Profile 14a, 14b sind an das Querschnitts-Profil und die Profiländerung in Längsrichtung L des Rotorblattes angepasst und zur Wurzel hin aufgefächert.

Die Krafteinleitung aus der Strömungsprofilschale 1a, 1b in die CFK-Profile 14a, 14b erfolgt über Bolzenverbindungen 24 mit den beiden in Abstand voneinander und parallel zueinander angeordneten Holzstegen 23, die sich in Erstreckungsrichtung L des Rotorblattes erstrecken. Die Spante 6a, 6b werden in Aussparungen in den Holzstegen 23 gesteckt. Die Spante 6a, 6b sind mit der Strömungsprofilschale 1a, 1b verklebt. Die Bolzen 24 sind von innen eingesteckt und außen einseitig angezogen.

Fig. 11 lässt eine Schnittansicht des Wurzelbereichs des Rotorblattes aus Figur 10 mit einer Rippe 25 und Befestigungshülsen 8 erkennen.

In der Rotorblattwurzel ist eine Verstärkung der Strömungsprofilschale 1a, 1b durch Rippen 25 und Holzbalken bzw. die in den Wurzelbereich auslaufenden Holzstege 23 vorgesehen. In dem Bohrkreis sind auf Höhe der Gurte bzw. der in dem Wurzelbereich auslaufenden Querstege 22 der CFK-Profile 14a, 14b eingeklebte Befestigungshülsen 8 für die Verbindung des Rotorblattes mit einer Nabe einer Windkraftanlage angeordnet. Die Befestigungshülsen 8 sind an der Stirnseite des Rotorblatts über den Umfang des Wurzelbereichs verteilt angeordnet. Sie erstrecken sich jeweils in Erstreckungsrichtung L des Rotorblattes in das Material des Wurzelbereichs hinein.

Die Demontage und das Remanufacturing erfolgen durch Absägen der Vorderkante V und Hinterkante H neben den CFK-Profilen 14a, 14b. Die Bolzenverbindung 24 der CFK-Profile 14a, 14b wird gelöst bzw. zerstört. Der Holm 5, d. h. die aus den CFK-Profilen 14a, 14b gebildeten Gurte, können durch Überlaminieren aufgedickt und verlängert werden. Eine Wiederverwendung der Durchgangsbohrungen ist für eine Verbindung mit neuer Rotorblattstruktur möglich.

Die Ausführungsform ermöglicht eine zerstörungsfreie Demontage der CFK-Profile 14a, 14b. Es bestehen keine Toleranzprobleme zwischen der Strömungsprofilschale 1a, 1b und den CFK-Profilen 14a, 14b. Die Konstruktion ermöglicht eine lastgerechte Krafteinleitung in die CFK-Profile 14a, 14b.

Die erforderliche hohe Anzahl von Bolzenverbindungen 24 erhöhen nachteilig das Gewicht des Rotorblattes. Aufgrund des einseitigen Fügens der Bolzen 24 ist ein erhöhter Montageaufwand erforderlich. Zudem ist der Fertigungs- und Kostenaufwand der Spante 6a, 6b etwas größer. Zudem ist die Toleranzproblematik zwischen den Spanten 6a, 6b, der Strömungsprofilschale 1a, 1b und den Holzstegen 23 zu beachten.

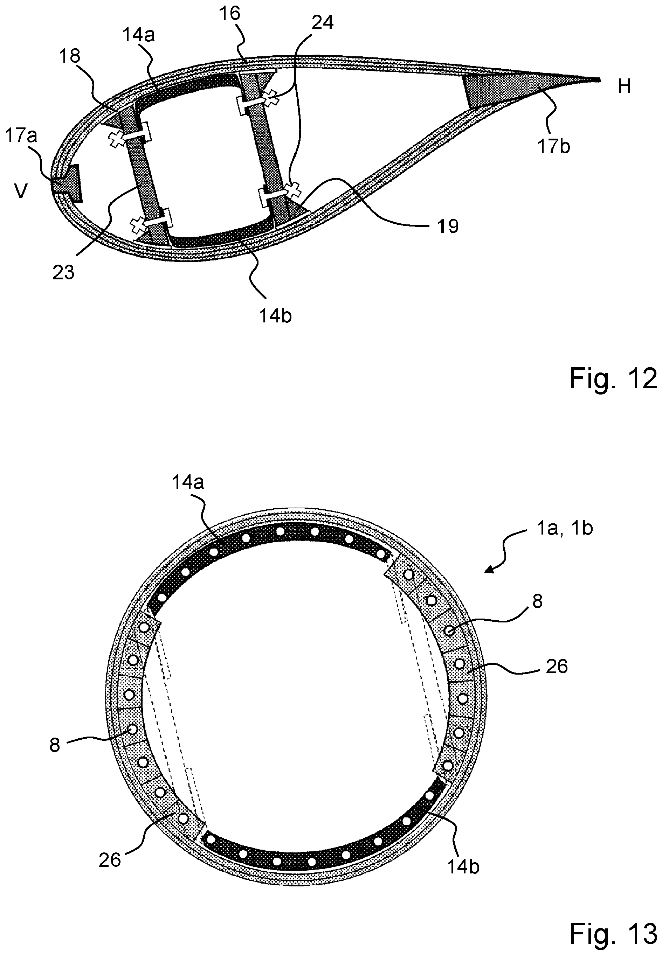

Fig. 12 zeigt eine Schnittansicht des mittleren Bereichs einer vierten Ausführungsform eines Rotorblattes mit aus zwei U-Profilen gebildeten Kastenholm 5 und daran angeklebter Strömungsprofilschale 1a, 1b aus Furnierschichtholz.

Die Strömungsprofilschale 1a, 1b ist wiederum aus einem formgepressten Furnierschichtholz gebildet. Dies hat den Vorteil einer geringen Steifigkeit und Dichte. Zur Erhöhung der Biegesteifigkeit der Strömungsprofilschale 1a, 1b zwischen Hinterholm und Hinterkante zwecks Stabilität kann insbesondere eine dünne Strömungsprofilschale 1a, 1b mit einer zusätzlichen Verstärkung versehen werden.

Eine Holzverstärkung an der Vorderkante V und Hinterkante H durch Profilleisten 17a, 17b führt zu einer hohen Steifigkeit und Festigkeit.

Zwei U-Profile 14a, 14b aus CFK bilden in Kombination mit Holzstegen 23 einen Kastenholm 5. Damit wird als Kompromiss ein Holmträger 5 mit einer hohen Steifigkeit und Festigkeit an der Verschraubung und einer geringen Dichte im übrigen Bereich bereitgestellt. Die CFK-Profile 14a, 14b sind an das Querschnittsprofil und die Profiländerung in Längsrichtung L des Rotorblattes angepasst und zur Wurzel hin aufgefächert. Die CFK-Profile 14a, 14b (=Gurte) können alternativ thermoplastisch mit der Strömungsprofilschale 1a, 1b und den Holzstegen 23 verklebt sein (Klebeverbindungen 18). Dann kann die Strömungsprofilschale 1a, 1b über den CFK-Profilen 14a, 14b deutlich dünner sein, so dass sich die Biegesteifigkeit des Holmes 5 erhöht. Denkbar ist aber auch, dass die CFK-Profile 14a, 14b nur mit der Strömungsprofilschale 1a, 1b verklebt sind.

Die Krafteinleitung von der Strömungsprofilschale 1a, 1b in die CFK-Profile 14a, 14b erfolgt über Bolzenverbindungen 24 mit den Holzstegen 23. Die Holzstege 23 erstrecken sich im Abstand voneinander parallel in Erstreckungsrichtung L des Rotorblattes. Sie sind mit der Strömungsprofilschale 1a, 1b an Fügestellen 18 verklebt.

Zur Vergrößerung der Klebefläche können Holzwinkel 19 an die Stege 23 geleimt werden.

Die Holzstege 23 verfügen über Aussparungen, die eine Montage der Bolzen 24 von innen ermöglichen. Die Bolzen 24 werden von innen eingesteckt und außen einseitig angezogen.

Fig. 13 lässt eine Schnittansicht des Wurzelbereichs des Rotorblattes aus Figur 12 mit Befestigungshülsen 8 erkennen.

In der Rotorblattwurzel ist eine Verstärkung der Strömungsprofilschale 1a, 1b mit Holzbalken 26 vorgesehen. In dem Bohrkreis sind stirnseitig in den zylinderförmigen Wurzelabschnitt auf Höhe der CFK-Profile 14a, 14b Befestigungshülsen für die Verbindung mit einer Nabe einer Windkraftanlage eingeklebt.

Zur Demontage und zum Remanufacturing erfolgt ein Absägen der Vorderkante V und Hinterkante H neben den CFK-Profilen 14a, 14b. Die Bolzenverbindung 24 der CFK-Profile 14a, 14b wird gelöst bzw. zerstört. Die Profile können durch Überlaminieren aufgedickt und verlängert werden. Eine Wiederverwendung der Durchgangsbohrungen ist für eine Verbindung mit einer neuen Rotorblattstruktur möglich.

Diese Ausführungsform ermöglicht eine zerstörungsfreie Demontage der CFK-Profile 14a, 14b, die wiederverwendet werden können. Es sind keine Toleranzprobleme zwischen der Strömungsprofilschale 1a, 1b und den CFK-Profilen 14a, 14b vorhanden. Die Konstruktion erlaubt eine lastgerechte Krafteinleitung in die CFK-Profile 14a, 14b.

Zahlreiche Bolzenverbindungen 24 erhöhen nachteilig das Gewicht des Rotorblattes. Die Fertigung der Bohrungen für die Verbindung der Profile mit den Holzstegen 23 ist aufwendiger. Es ist ein erhöhter Montageaufwand aufgrund des einseitigen Fügens der Bolzen 24 erforderlich.

Mit den beschriebenen Ausführungsformen ist eine Wiederverwendung eines biegesteifen Holmes 5, der beispielsweise aus CFK-Profilen 14a, 14b gebildet wird, und eine Fertigung der Rotorblattschale aus Holzwerkstoffen möglich.

Für einen Holm 5, welcher als Biegetorsionsträger ausgelegt wird, gibt es bereits viele geometrische Lösungen, welche in konventionellen Rotorblättern Anwendung finden. Etablierte Profile sind I-Träger, C-Träger, Kastenholme und D-Holme. Ziel ist es, immer eine Form zu wählen, bei der die lastaufnehmenden Flächen möglichst weit weg von der Biegeachse positioniert werden, um ein hohes Flächenträgheitsmoment zu erhalten. Die genannten Profile können in Integralbauweise (Holmkasten) oder als Gurte und Stege getrennt in Differentialbauweise konstruiert werden.

Bei den Ausführungsbeispielen lassen sich die bewährten Profile mit zerstörungsfrei lösbaren und wiederverwendbaren Konstruktionen aus CFK-Profilen 14a, 14b fertigen. Die Stege 21, 23 können, da sie überwiegend Scherkräfte aufnehmen, auch aus Holz gefertigt werden.

Von der Fügetechnik zur Verbindung von Gurten, Stegen und Schalen hängt die Möglichkeit der Wiederverwendung der Komponenten ab und auch der Nacharbeits- und Fertigungsaufwand für die Zweitnutzung. Hier sind insbesondere zwei Varianten denkbar:
a) Klebeverbindung der CFK-Gurte mit Holzstegen und der Holzschale (beispielsweise mit Thermoplast als Klebstoff);
b) Bolzenverbindung zwischen CFK-Gurten und Holzstegen und Klebeverbindung der Holzstege mit der Holzschale.

Ein für eine Zweitnutzung der Tragholmstruktur 4a, 4b zur Leistungssteigerung der Windkraftanlage größeres Rotorblatt muss höhere Biegemomente aufnehmen können. Dazu muss die tragende Struktur an die höhere Beanspruchung angepasst werden, was durch eine Vergrößerung des Blattwurzeldurchmessers und eine Verlängerung des Rotorblattes erfolgen kann. Die CFK-Komponenten werden dazu entsprechend aufbereitet, was die Reparatur durch Überlaminieren von beschädigten Stellen und die Verlängerung der Gurte sowie die Anpassung an die neue Form z. B. durch Überlaminieren umfasst.

Die oben beschriebenen Ausführungsbeispiele zeigen generelle prinzipielle Konzepte für Bauweisen und die Konstruktion mit "Ein-Material"-Konzepten. Dabei müssen die Komponenten nicht immer aus einem Material bestehen, sondern es sind auch Hybridbauweisen möglich. So sind etwa Holzschalen mit einer Glasfaserschicht an der Oberfläche für die Wetterbeständigkeit sowie verbesserte aerodynamische Eigenschaften möglich. Auch die Steifigkeiten von Schalen und Holmen können über Anteile an Faserkunststoffverbund (FKV)-Einzellagen erhöht werden.

### Bezugszeichenliste

- 1a, 1b: Strömungsprofilschale
- 2: Wurzelbereich
- 3: Profilabschnitt
- 4a, 4b: Tragholmstruktur
- 5: Holm
- 6a, 6b: Spante
- 7: Wurzelbereich
- 8: Befestigungshülse
- 9a, 9b: Bohrungen
- 10: Stringer
- 11: Befestigungswinkel
- 13: Schrauben
- 14: CFK-Gurte
- 14a, 14b: CFK-Profile
- 15: Holzsteg
- 16: Furnierschichtholzbalken
- 17a, 17b: Massivholzprofil / Profilleiste
- 18: Klebeverbindung
- 19: Holzwinkel
- 20: Holzbalken
- 21: Schubsteg
- 22: Quersteg
- 23: Holzsteg
- 24: Bolzenverbindung
- 25: Rippe
- 26: Holzbalken
- B: Blattspitze
- H: Hinterkante
- L: Erstreckungslänge
- V: Vorderkante

## Patentansprüche

1. Rotorblatt für eine Windkraftanlage mit einer Tragholmstruktur (4a, 4b) und einer die Tragholmstruktur (4a, 4b) umhüllenden Strömungsprofilschale (1a, 1b),
**dadurch gekennzeichnet, dass**
die Strömungsprofilschale (1a, 1b) aus einem Biowerkstoff gebildet ist,
die Tragholmstruktur (4a, 4b) aus einem Material mit einer höheren Festigkeit als der Biowerkstoff der Strömungsprofilschale (1a, 1b) gebildet ist und sich über die Länge der Strömungsprofilschale (1a, 1b) erstreckt,
die Strömungsprofilschale (1a, 1b) an der Tragholmstruktur (4a, 4b) demontierbar derart befestigt ist, dass die Strömungsprofilschale (1a, 1b) von der Tragholmstruktur (4a, 4b) lösbar und zur Weiterverwendung der Tragholmstruktur (4a, 4b) auswechselbar ist und im befestigten Zustand fest an der Tragholmstruktur (4a, 4b) gehalten wird.

2. Rotorblatt nach Anspruch 1, **dadurch gekennzeichnet, dass** die Tragholmstruktur (4a, 4b) aus einem Kohlenstofffaser-Kunststoffverbundmaterial gebildet ist.

3. Rotorblatt nach Anspruch 1 oder 2, **dadurch gekennzeichnet, dass** die Tragholmstruktur (4a, 4b) bei der Weiterverwendung einen Verlängerungsabschnitt hat, der an die zur Weiterverwendung ausgewechselte Tragholmstruktur (4a, 4b) angeformt ist.

4. Rotorblatt nach einem der Ansprüche 1 bis 3, **dadurch gekennzeichnet, dass** die Strömungsprofilschale (1a, 1b) aus einem Holzwerkstoff gebildet ist.

5. Rotorblatt nach Anspruch 4, **dadurch gekennzeichnet, dass** die Strömungsprofilschale (1a, 1b) aus Furnierschichtholz gebildet ist.

6. Rotorblatt nach einem der vorhergehenden Ansprüche, **dadurch gekennzeichnet, dass** die äußere Oberfläche der Strömungsprofilschale (1a, 1b) beschichtet ist.

7. Rotorblatt nach einem der vorhergehenden Ansprüche, **dadurch gekennzeichnet, dass** die Tragholmstruktur (4a, 4b) einen sich in eine Erstreckungsrichtung erstreckenden Holm (5) und mehrere, in Erstreckungsrichtung im Abstand voneinander an dem Holm (5) angeordnete Spante (6a, 6b) hat, die quer von dem Holm (5) abragen.

8. Rotorblatt nach Anspruch 7, **dadurch gekennzeichnet, dass** die Spante (6a, 6b) in Erstreckungsrichtung (L) durch Stringer (10) miteinander verbunden sind.

9. Rotorblatt nach einem der vorhergehenden Ansprüche, **dadurch gekennzeichnet, dass** die Tragholmstruktur (4a, 4b) einen sich im Wurzelbereich (7) zu einem kreisförmigen Anschlussflansch verbreiternden Holm (5) hat und dass die Strömungsprofilschale (1a, 1b) den kreisförmigen Anschlussflansch umfangsseitig umschließt und in Erstreckungsrichtung (L) der Tragholmstruktur (4a, 4b) erstreckende Befestigungsbolzen (8) über den Umfang des Anschlussflansches verteilt mit der Strömungsprofilschale (1a, 1b) und der Tragholmstruktur (4a, 4b) verbunden sind.

10. Rotorblatt nach einem der vorhergehenden Ansprüche, **dadurch gekennzeichnet, dass** die Tragholmstruktur (4a, 4b) ein Biegetorsionsträger mit einem Kastenholmprofil, D-Holmprofil, I-Trägerprofil oder C-Trägerprofil ist.

11. Rotorblatt nach einem der vorhergehenden Ansprüche, **dadurch gekennzeichnet, dass** die Tragholmstruktur (4a, 4b) mehrere, sich in Erstreckungsrichtung (L) der Tragholmstruktur (4a, 4b) erstreckende Gurte (14, 14a, 14b) hat und dass die Tragholmstruktur (4a, 4b) oder die Strömungsprofilstruktur (1a, 1b) Stege (15, 21, 23) hat, welche die Gurte (14, 14a, 14b) quer zur Erstreckungsrichtung (L) miteinander verbinden.

12. Rotorblatt nach einem der vorhergehenden Ansprüche, **dadurch gekennzeichnet, dass** die Tragholmstruktur (4a, 4b) mit der Strömungsprofilstruktur (1a, 1b) formschlüssig und/oder stoffschlüssig lösbar miteinander verbunden sind.

13. Verfahren zur Wiederverwertung von Rotorblättern für Windkraftanlagen mit einer Tragholmstruktur (4a, 4b) und einer die Tragholmstruktur (4a, 4b) umhüllenden Strömungsprofilschale (1a, 1b), **gekennzeichnet durch**
- Demontieren der Strömungsprofilschale (1a) von der Tragholmstruktur (4a) durch Lösen der Verbindungsstellen zwischen der Tragholmstruktur (4a) und der Strömungsprofilschale (1a) so, dass die Tragholmstruktur (4a) funktionsfähig erhalten bleibt,
- Aufbereiten der Tragholmstruktur (4a) für die Weiterverwendung mit Anpassen an die hierzu benötigte Struktur, und
- Umhüllen der aufbereiteten Tragholmstruktur (4b) mit einer neuen Strömungsprofilschale (1b).

14. Verfahren nach Anspruch 13, **gekennzeichnet durch** Verlängern der demontierten Tragholmstruktur (4a) im Schritt des Aufbereitens mit einem Verlängerungsabschnitt, der an die demontierte Tragholmstruktur (4a) angeformt wird.
